(19) Europäisches Patentamt
European Patent Office
Office européen des brevets

(11) Veröffentlichungsnummer: **0 563 961 B1**

# (12) EUROPÄISCHE PATENTSCHRIFT

(45) Veröffentlichungstag der Patentschrift: **28.06.95**

(51) Int. Cl.6: **C08K 5/54**, C08L 83/08, C08J 3/03, C08G 77/38, D06M 15/643

(21) Anmeldenummer: **93105428.2**

(22) Anmeldetag: **01.04.93**

## (54) Vernetzbare Zusammensetzung auf Aminosiliconbasis.

(30) Priorität: **03.04.92 DE 4211256**

(43) Veröffentlichungstag der Anmeldung:
**06.10.93 Patentblatt 93/40**

(45) Bekanntmachung des Hinweises auf die Patenterteilung:
**28.06.95 Patentblatt 95/26**

(84) Benannte Vertragsstaaten:
**BE CH DE FR GB IT LI**

(56) Entgegenhaltungen:
**EP-A- 0 095 676**
**EP-A- 0 114 636**
**EP-A- 0 342 834**
**EP-A- 0 358 329**
**DE-A- 3 927 312**
**US-A- 4 757 121**

**DATABASE WPIL Section Ch, Week 8231, Derwent Publications Ltd., London, GB;Class C31, AN 82-64402E ; & JP-A-57101076**

(73) Patentinhaber: **WACKER-CHEMIE GMBH**
**Hanns-Seidel-Platz 4**
**D-81737 München (DE)**

(72) Erfinder: **Bindl, Johann, Dr.**
**In den Grueben 172**
**W-8263 Burghausen (DE)**
Erfinder: **Ninomiya, Kiyoshi**
**1-26-6 Hamadayama**
**Suginami-ku,**
**Tokyo 168 (JP)**
Erfinder: **Taketa, Izura**
**Plaza Samoire 103,**
**1512 Daitoh-cho**
**Osaka,**
**Shizuoka 437-14 (JP)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine vernetzbare Zusammensetzung auf Basis von Aminogruppen aufweisendem Organopolysiloxan. Die vernetzbare Zusammensetzung und deren Umsetzungsprodukt ist insbesondere als Textilausrüstungsmittel einsetzbar.

Aminogruppen aufweisende Organopolysiloxane werden schon seit einiger Zeit als Textilausrüstungsmittel eingesetzt. Bei den damit behandelten Textilien werden gute Weichgriffeffekte erreicht. Die bislang bevorzugt verwendete aminofunktionelle Gruppe

$-(CH_2)_3NHCH_2CH_2NH_2$

zeigt jedoch eine starke Neigung zur Thermovergilbung, einer Verfärbung der behandelten Fasern, die durch erhöhte Temperatur beschleunigt wird.

Die Reduzierung der Thermovergilbung durch Umsetzung des Aminogruppen aufweisenden Organopolysiloxans mit organischen Epoxiden ist beispielsweise beschrieben in der EP-A-399 706 (S.E.Cray und F.Renauld; offengelegt am 28.11.1990 für Dow Corning Ltd., Großbritannien). Jedoch ist die dadurch erzielte Wirkung nicht ausreichend.

Eine wirksamere Reduzierung der Thermovergilbung ist durch Umsetzung mit Acylierungsmitteln, wie Carbonsäuren und deren Anhydriden, beschrieben in beispielsweise EP-A-349 753 und EP-A-349 754 (M.Ozaki et al.; offengelegt am 10.01.1990 für Toray Silicone Co., Ltd, Japan). Acylierungsmittel zur Reduzierung der Thermovergilbung sind ferner Lactone, deren Verwendung zur Modifizierung von Aminosilicon-Textilbehandlungsmitteln bekannt ist aus u.a. EP-A-342 830 und EP-A-342 834 (S.E.Cray et al.; offengelegt am 05.05.1989 für Dow Corning Ltd., Großbritannien), Carbonate, deren Verwendung bekannt ist aus JP-A-90/47371 (S.Yokoyama und K. Hirota; offengelegt am 16.02.1990 für Kyoeisha Yushi K.K. AG, Japan) und Oxalsäureester, deren Verwendung bekannt ist aus US-A-5,039,738 (A.M.Czech; ausgegeben am 13.08.1991 für Union Carbide Corp., USA).

Die Acylierungsmittel verringern jedoch den Weichgriffeffekt der behandelten Textilien bei hohen Acylierungsgraden.

Einige wünschenswerte Eigenschaften der behandelten Textilien, wie Sprungelastizität und Knittererholung, werden neben dem Weichgriffeffekt durch ein elastomeres Verhalten der Aminosilicon-Textilbehandlungsmittel verbessert.

Aus der EP-A-358 329 (K.Spyropolous; offengelegt am 14.03.1990 für Dow Corning Ltd., Großbritannien) ist die Anwendung von epoxyfunktionellen Trialkoxysilanen als Vernetzerkomponenten in einem Aminosilicon-Textilbehandlungsmittel bekannt. In der US-A-4,757,121 (M.Tanaka und H.Ohashi; ausgegeben am 12.07.1988 für Shin-Etsu Chemical Co., Ltd., Japan) ist der Einsatz von epoxyfunktionellen Silanen und zusätzlich organischen Epoxiden beschrieben. In beiden Fällen wird zwar ein Elastomercharakter der Textilbehandlungsmittel erreicht, jedoch ist die Reduzierung der Thermovergilbung unzureichend.

Aus der JP-A-87/41379 (T.Yasukawa und K.Miyata; offengelegt am 23.02.1987 für Nikka Chemical Industry Co., Ltd.) ist die Umsetzung von Aminogruppen aufweisendem Organopolysiloxan mit Essigsäureanhydrid und epoxyfunktionellen Silanen bekannt. Die erhaltenen Aminosilicon-Textilbehandlungsmittel sind jedoch nur eine Kompromißlösung zwischen guter Vernetzungsfähigkeit und Reduzierung der Thermovergilbung, da das epoxyfunktionelle Silan nur wenig zur Reduzierung der Thermovergilbung und Essigsäureanhydrid nichts zur Vernetzungsfähigkeit beiträgt.

EP-A-95 676 beschreibt aminofuktionelle Organopolysiloxane, deren Umsetzung mit organischen, siloxanfreien Carbonsäureanhydriden und die Verwendung des Umsetzungsprodukts zur Textilausrüstung. Als Carbonsäureanhydride werden in den Beispielen von EP-A-95 676 Maleinsäure-, Bernsteinsäure- und Phthalsäureanhydrid eingesetzt.

Der vorliegenden Erfindung liegt die Aufgabe zugrunde, eine vernetzbare Zusammensetzung auf Basis von Aminogruppen aufweisendem Organopolysiloxan bereitzustellen, die als Textilausrüstungsmittel einsetzbar ist oder aus der leicht ein Textilausrüstungsmittel hergestellt werden kann, welches sowohl eine gute Vernetzungsfähigkeit als auch eine gute Reduzierung der Thermovergilbung erreicht.

Die Erfindung betrifft eine vernetzbare Zusammensetzung enthaltend

(A) Organopolysiloxan, das mindestens einen einwertigen SiC-gebundenen Rest mit primären und/oder sekundären Aminogruppen aufweist,

(B) als Vernetzerkomponente ein mindestens eine Carbonsäureanhydridgruppe aufweisendes Alkoxysilan und/oder Siloxan für die Vernetzung zwischen den Komponenten (A) und (B) und gegebenenfalls

(C) als Acylierungsmittel Carbonsäuren und deren Anhydride, Lactone, Lactide der allgemeinen Formel

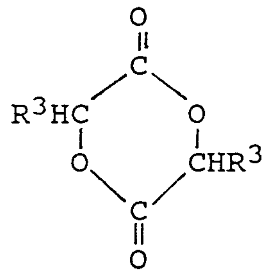

,

in der **$R^3$** einen einwertigen, gegebenenfalls mit einer oder mehreren Hydroxygruppen substituierten $C_1$- bis $C_{18}$-Kohlenwasserstoffrest, ein Wasserstoffatom oder einen Hydroxyrest bedeutet,
Carbonate und Oxalsäureester.

Die Vernetzerkomponente (B) reduziert bereits wirksam die Thermovergilbung der aus der erfindungsgemäßen vernetzbaren Zusammensetzung erhaltenen Organopolysiloxanverbindung; deshalb kann auf die zusätzliche Verwendung von Acylierungsmitteln verzichtet werden. Ferner können bei aminofunktionellen Siliconweichmachern durch Einsatz der erfindungsgemäßen Vernetzerkomponente (B) die Hydrophilie und Alkalistabilität verbessert werden.

Vorzugsweise weist in der Zusammensetzung das Organopolysiloxan (A) mindestens eine Siloxaneinheit der allgemeinen Formel (I)

$$R^1_a Q_b SiO_{\frac{(4-a-b)}{2}} \qquad (I)$$

auf, und alle anderen Siloxaneinheiten die allgemeine Formel (II)

$$R^1_c SiO_{\frac{(4-c)}{2}} , \qquad (II)$$

wobei
**$R^1$** gleiche oder verschiedene, einwertige, gegebenenfalls Fluor-, Chlor- oder Brom- substituierte $C_1$- bis $C_{18}$-Kohlenwasserstoffreste, Wasserstoffatome,
$C_1$- bis $C_{12}$-Alkoxy- oder Hydroxyreste oder Alkylglykolreste bedeutet,
**Q** eine Gruppe der allgemeinen Formel (III)

$-R^5-[NR^2(CH_2)_m]_dNHR^2$ (III)

bedeutet, wobei
**$R^5$** einen zweiwertigen $C_1$- bis $C_{18}$-Kohlenwasserstoffrest bedeutet,
**$R^2$** ein Wasserstoffatom oder einen gegebenenfalls Fluor-, Chlor- oder Brom- substituierten $C_1$- bis $C_{18}$-Kohlenwasserstoffrest bedeutet,
**a** die Werte 0, 1 oder 2 hat,
**b** die Werte 1, 2 oder 3 hat,
**c** die Werte 0, 1, 2 oder 3 hat,
**d** die Werte 0, 1, 2, 3 oder 4 hat,
**m** die Werte 2, 3, 4, 5 oder 6 hat
und die Summe aus a und b maximal 4 beträgt.

Beispiele für $C_1$- bis $C_{18}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Die vorstehenden Kohlenwasserstoffreste $R^1$ enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste $R^1$ mit aliphatischer Doppelbindung sind der Vinyl-, Allyl-, und 5-Hexen-1-ylrest.

Vorzugsweise enthalten jedoch höchstens 1 % der Kohlenwasserstoffreste $R^1$ eine Doppelbindung.

Beispiele für mit Fluor-, Chlor- oder Bromatomen substituierte $C_1$- bis $C_{18}$-Kohlenwasserstoffreste sind der 3,3,3-Trifluor-n-propylrest, der 2,2,2,2',2',2'-Hexafluorisopropylrest, der Heptafluorisopropylrest, und der o-, m-, und p-Chlorphenylrest.

Beispiele für die zweiwertigen $C_1$- bis $C_{18}$-Kohlenwasserstoffreste $R^5$ sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenreste, wobei der n-Propylenrest und der 2-Methylpropylenrest besonders bevorzugt ist.

Die Alkoxyreste sind über ein Sauerstoffatom gebundene, vorstehend beschriebene Alkylreste. Die Beispiele für Alkylreste gelten im vollen Umfang auch für die Alkoxyreste $R^1$.

Die Alkylglykolreste $R^1$ weisen vorzugsweise die allgemeine Formel (IV)

$$-R^5-[O(CHR^2)_d]_nOR^{10} \qquad (IV)$$

auf, in der $\mathbf{R^2}$, $\mathbf{R^5}$ und **d** die vorstehenden Bedeutungen haben, **n** den Wert 1 bis 100 hat und $\mathbf{R^{10}}$ ein Wasserstoffatom, einen Rest $R_2$ oder eine Gruppe der allgemeinen Formel

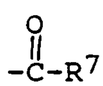

bedeutet, wobei $R^7$ den Rest $R^2$ oder O-$R^2$ bedeutet.

In den vorstehenden allgemeinen Formeln (I) bis (IV) bedeuten vorzugsweise

$\mathbf{R^1}$ einen Methyl-, Phenyl-, $C_1$- bis $C_3$-Alkoxy- oder Hydroxyrest oder einen Rest der allgemeinen Formel (IV),

$\mathbf{R^5}$ einen zweiwertigen $C_2$- bis $C_6$-Kohlenwasserstoffrest,

$\mathbf{R^2}$ ein Wasserstoffatom oder einen Methylrest,

**a** die Werte 0 oder 1,

**b** den Wert 1,

**c** die Werte 2 oder 3 und

**d** den Wert 1.

Besonders bevorzugt sind lineare Polydimethylsiloxane, die gegebenenfalls $C_1$- bis $C_3$-Alkoxy- oder Hydroxyendgruppen aufweisen. Vorzugsweise bedeutet bei diesen Polymethylsiloxanen Q eine Gruppe $H_2N(CH_2)_2NH(CH_2)_3$- oder $H_2N(CH_2)_2NHCH_2CH(CH_3)CH_2$-.

Vorzugsweise beträgt das Verhältnis der Siloxaneinheiten der allgemeinen Formel (I) zu den Siloxaneinheiten der allgemeinen Formel (II) 1 : 10 bis 30 000, insbesondere 1 : 20 bis 300. Die Amingehalte betragen vorzugsweise 0,001 bis 2 mequiv/g, insbesondere 0,1 bis 1,0 mequiv/g, gemessen als Verbrauch an In Salzsäure in ml/g Organopolysiloxan (A) bei der Titration bis zum Neutralpunkt.

Es kann eine Art von Organopolysiloxan (A) eingesetzt werden. Es kann aber auch ein Gemisch aus mindestens zwei verschiedenen Arten von Organopolysiloxan (A) eingesetzt werden.

Das Organopolysiloxan (A) oder ein Gemisch aus mindestens zwei verschiedenen Arten von Organopolysiloxan (1) hat vorzugsweise eine durchschnittliche Viskosität von 50 bis 100000 mPa.s, insbesondere 100 bis 10000 mPa.s bei 25 °C.

Das als Vernetzerkomponente (B) wirksame Siloxan weist vorzugsweise mindestens eine Siloxaneinheit der allgemeinen Formel (V)

$$R^1_a Z_b SiO_{\frac{(4-a-b)}{2}} \qquad (V)$$

auf und alle anderen Siloxaneinheiten besitzen die allgemeine Formel (VI)

$$R^1_c SiO_{\frac{(4-c)}{2}} \quad , \qquad (VI)$$

wobei
**R¹**, **a**, **b** und **c** die vorstehenden Bedeutungen aufweisen,
**Z** eine anhydridfunktionelle Gruppe der allgemeinen Formel (VII)

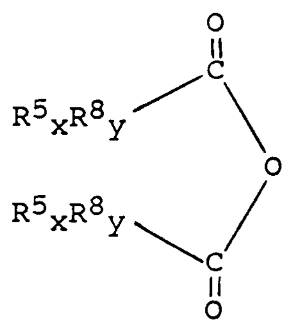

(VII)

ist, in der
**R⁸** einen Rest $R^2$ bedeutet oder beide Reste $R^8$ zusammen mit den Kohlenstoffatomen, an die sie gebunden sind einen cyclischen Kohlenwasserstoffrest mit 5 bis 15 Ringatomen bilden, der über einen zweiwertigen Rest $R^9$ an das Siliciumatom gebunden ist,
**x** und **y** jeweils die Werte 0 oder 1 haben,
**R⁹** einen zweiwertigen $C_1$- bis $C_6$-Kohlenwasserstoffrest oder eine chemische Bindung bedeutet und
$R^5$ und $R^2$ die vorstehenden Bedeutungen aufweisen.

Vorzugsweise weist das als Vernetzerkomponente (B) wirksame Siloxan mehr als eine anhydridfunktionelle Gruppe auf oder besitzt neben einer anhydridfunktionellen Gruppe mindestens einen $C_1$- bis $C_{12}$-Alkoxy- oder Hydroxyrest.

Das als Vernetzerkomponente (B) wirksame Alkoxysilan weist vorzugsweise die allgemeine Formel (VIII)

$R^1_b Z_{(3-b)} Si$ (VIII)

auf, in der **Z**, **R¹** und **b** die vorstehenden Bedeutungen aufweisen, mit der Maßgabe, daß mindestens ein Rest $R^1$ einen $C_1$- bis $C_{12}$-Alkoxyrest bedeutet.

Beispiele für anhydridfunktionelle Gruppen der allgemeinen Formel (VII), in denen beide Reste $R^8$ zusammen mit den Kohlenstoffatomen, an die sie gebunden sind, einen cyclischen Kohlenwasserstoffrest bilden sind

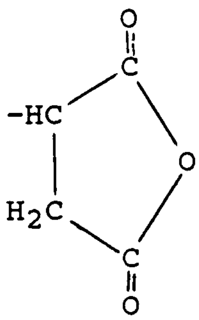

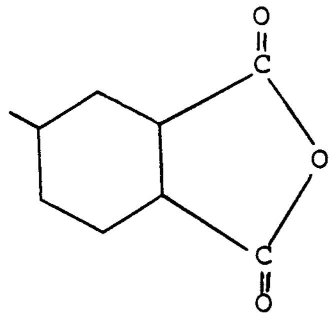

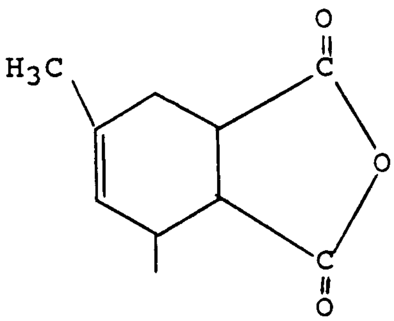

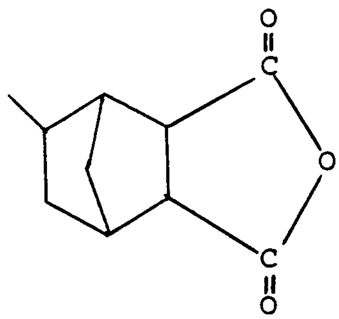

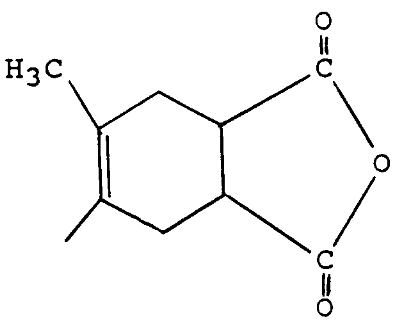

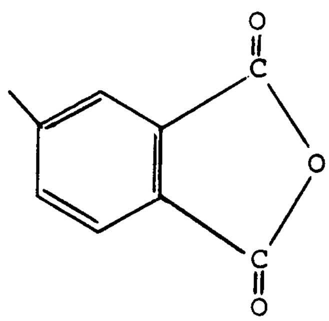

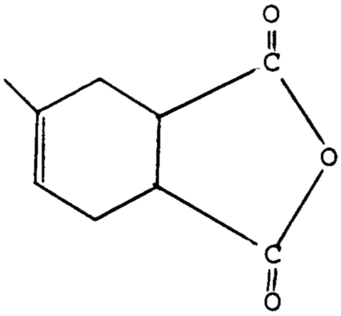

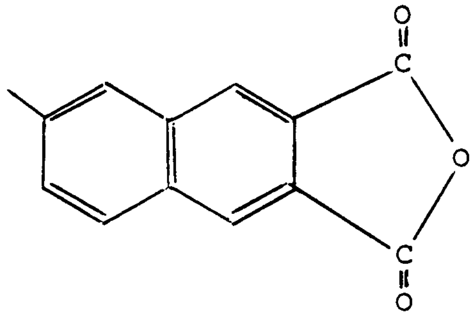

.

Besonders bevorzugt sind Silane der allgemeinen Formel (IX)

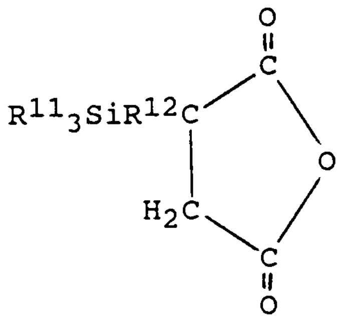

, (IX)

in der $R^{11}$ einen $C_1$- bis $C_6$-Alkoxyrest, insbesondere einen Methoxy- oder Ethoxyrest bedeutet und $R^{12}$ einen geradkettigen $C_2$- bis $C_6$-Alkylenrest bedeutet.

Die Herstellung der mindestens eine Carbonsäureanhydridgruppe aufweisenden Alkoxysilane und Siloxane ist aus beispielsweise EP-A-114 636 (T.Lindner et al.; offengelegt am 1.08.1984 für Wacker Chemie GmbH, München), DE-A-39 27 312 (C.Herzig und J. Esterbauer; offengelegt am 21.02.1991 für Wacker Chemie GmbH, München) und US-A-4,634,755 (J.E.Hallgren und D.V.Brezniak; ausgegeben am 06.11.1987 für General Electric Co., USA) bekannt.

Da die Vernetzerkomponenten (B) auch die Thermovergilbung ebenso wie übliche Acylierungsmittel reduzieren, kann das Verhältnis Acylierungsmittel (C) zu Vernetzerkomponente (B) beliebig gewählt werden, ohne Veränderungen bezüglich der Thermovergilbung in Kauf nehmen zu müssen. Somit kann bei gleichbleibender Thermovergilbung der Vernetzungsgrad gezielt eingestellt werden. Umgekehrt kann bei einem gewählten Vernetzungsgrad minimale Thermovergilbung erreicht werden. Durch die Kombination von Vernetzerkomponente (B) mit Acylierungsmittel (C) können ferner Textilausrüstungsmittel mit erwünschter Hydrophilie und Alkalistabilität erhalten werden.

Geeignete Acylierungsmittel sind beispielsweise Carbonsäuren und deren Anhydride, deren Verwendung zur Modifizierung von Aminosilicon-Textilbehandlungsmitteln bekannt ist aus u.a. JP-A-57/101076 (K.Kodera und S.Hashizume; offengelegt am 23.06.1982 für Nikka K.K. Co., Ltd. Japan), EP-A-349 753 und EP-A-349 754 (M.Ozaki et al.; offengelegt am 10.01.1990 für Toray Silicone Co., Ltd, Japan).

Besonders geeignet sind a) monofunktionelle Carbonsäuren und deren Anhydride der allgemeinen Formeln

$R^2$-COOH,
$R^2$-O($CH_2CHR^2O)_eR^5$-COOH,
$[R^2\text{-CO}]_2O$
und
$[R^2\text{-O}(CH_2CHR^2O)_eR^5\text{-CO}]_2O$,

in denen $R^2$ und $R^5$ die vorstehenden Bedeutungen aufweisen und **e** einen Wert von 0 bis 100 hat. Gemischte Anhydride aus zwei verschiedenen Carbonsäuren sind ebenfalls geeignet. Bevorzugt eingesetzt werden die Carbonsäuren und Anhydride der nachstehenden allgemeinen Formeln

$H(CH_2)_f$-COOH und $[H(CH_2)_fCO]_2O$,

in denen **f** einen Wert von 1 bis 19 hat, sowie

$H(CH_2)_gO(CH_2CH_2O)_gCH_2$-COOH und $[H(CH_2)_gO(CH_2CH_2O)_gCH_2\text{-CO}]_2O$

in denen **g** einen Wert von 1 bis 20 hat. Besonders bevorzugt ist Essigsäureanhydrid.

Besonders geeignet sind auch b) difunktionelle Carbonsäuren und deren cyclische Anhydride der allgemeinen Formeln

HOOC-$R^5$-COOH, HOOC-$R^5O(CH_2CHR^2O)_eR^5$-COOH

und

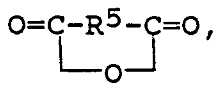

in denen $R^2$, $R^5$ und e die vorstehenden Bedeutungen aufweisen. Bevorzugt eingesetzt werden können die difunktionellen Carbonsäuren und cyclischen Anhydride der nachstehenden allgemeinen Formeln

$HOOC-(CH_2)_k-COOH$ und

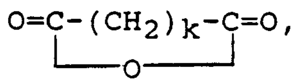

in denen **k** die Werte 2 bis 8 aufweist, sowie

$HOOC-CH_2(OCH_2CH_2)_eOCH_2-COOH$ und

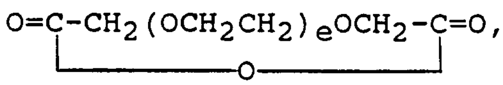

in denen e die vorstehende Bedeutung aufweist. Besonders bevorzugt ist Bernsteinsäureanhydrid und Maleinsäureanhydrid.

Geeignete Acylierungsmittel sind beispielsweise auch Lactone, deren Verwendung zur Modifizierung von Aminosilicon-Textilbehandlungsmitteln bekannt ist aus u.a. EP-A-342 830 und EP-A-342 834 (S.E.Cray et al.; offengelegt am 05.05.1989 für Dow Corning Ltd., Großbritannien).

Besonders geeignet sind Lactone und Lactide der allgemeinen Formeln

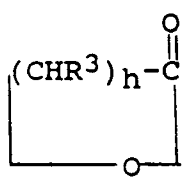

sowie

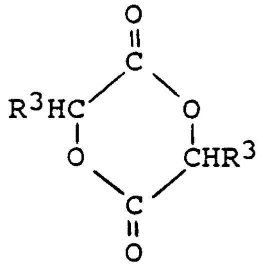 ,

in denen $\mathbf{R^3}$ einen einwertigen, gegebenenfalls mit einer oder mehreren Hydroxygruppen substituierten $C_1$- bis $C_{18}$-Kohlenwasserstoffrest, ein Wasserstoffatom oder einen Hydroxyrest bedeutet und **h** einen Wert von 2 bis 7 aufweist. Besonders bevorzugt sind γ-Butyrolacton, δ-Gluconolacton und das Lactid der Milchsäure.

Geeignete Acylierungsmittel sind auch c) Carbonate, deren Verwendung zur Modifizierung von Aminosilicon-Textilbehandlungsmitteln bekannt ist aus JP-A-90/47371 (S.Yokoyama und K. Hirota; offengelegt am 16.02.1990 für Kyoeisha Yushi K.K. AG, Japan).

Besonders geeignet sind Carbonate der allgemeinen Formeln

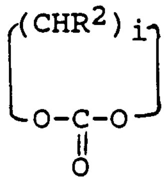

sowie

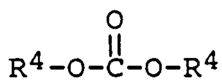 ,

in denen **R²** ein Wasserstoffatom oder einen gegebenenfalls Fluor-, Chlor- oder Brom-substituierten $C_1$- bis $C_{18}$-Kohlenwasserstoffrest bedeutet, **i** den Wert 2 oder 3 hat und **R⁴** einen gegebenenfalls Fluor-, Chlor- oder Brom-substituierten $C_1$- bis $C_{18}$-Kohlenwasserstoffrest oder eine Gruppe der allgemeinen Formel

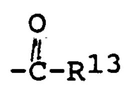

oder

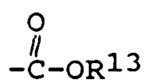

bedeutet, wobei $R^{13}$ ein gegebenenfalls Fluor-, Chlor- oder Brom-substituierter $C_1$- bis $C_{18}$-Kohlenwasserstoffrest ist.

Bevorzugt sind die cyclischen Carbonate, wie Ethylencarbonat, Propylencarbonat und Trimethylencarbonat, sowie Dimethyldicarbonat der Formel

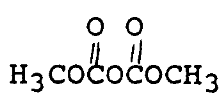 .

Geeignete Acylierungsmittel sind ferner d) Oxalsäureester, deren Verwendung zur Modifizierung von Aminosilicon-Textilbehandlungsmitteln bekannt ist aus US-A-5,039,738 (A.M.Czech; ausgegeben am 13.08.1991 für Union Carbide Corp., USA). Bevorzugt sind die Dimethylester, Diethylester, die verschiedenen isomeren Dipropylester, Dibutylester und Dipentylester der Oxalsäure.

Die erfindungsgemäße vernetzbare Zusammensetzung kann neben (A) Organopolysiloxan, (B) Carbonsäureanhydridgruppe aufweisendes Alkoxysilan und/oder Siloxan als Vernetzerkomponente und (C) Acylierungsmittel auch noch andere Vernetzerkomponenten enthalten. Geeignet sind beispielsweise die aus EP-A-358 329 (K.Spyropolous; offengelegt am 14.03.1990 für Dow Corning Ltd., Großbritannien) und US-A-4,757,121 (M.Tanaka und H.Ohashi; ausgegeben am 12.07.1988 für Shin-Etsu Chemical Co., Ltd., Japan) bekannten epoxyfunktionellen Silane und Siloxane. Zusätzliche Vernetzer können ferner Trialkoxy- oder Tetraalkoxysilane oder deren Teilhydrolysate sein.

Die erfindungsgemäße vernetzbare Zusammensetzung enthält, bezogen auf die Aminogruppen im Organopolysiloxan (A), vorzugsweise 1 bis 150 Mol-%, insbesondere 10 bis 90 Mol-%, anhydridfunktionelle Gruppen der Vernetzerkomponente (B) und 0 bis 150 Mol-%, insbesondere 20 bis 90 Mol-%, funktionelle Gruppen des Acylierungsmittels (C). Die Summe aus (B) und (C) liegt vorzugsweise bei 1 bis 150 Mol-%, insbesondere bei 30 bis 100 Mol-%.

Die erfindungsgemäße vernetzbare Zusammensetzung kann beliebige an sich bekannte Katalysatoren für die Kondensation von direkt an Silicium gebundenen, kondensationsfähigen Gruppen, wie Alkoxygruppen, enthalten. Beispiele für solche Kondensationskatalysatoren sind insbesondere Carbonsäuresalze von Zinn oder Zink, wobei an Zinn Kohlenwasserstoffreste direkt gebunden sein können, wie Di-n-butylzinndilaurat, Zinnoctoate, Di-2-ethylzinndilaurat, Di-n-butylzinndi-2-ethylhexoat, Di-2-ethylhexylzinndi-2-ethylhexoat, Dibutyl- oder Dioctylzinndiacylate, wobei sich die Acylatgruppen jeweils von Alkansäuren mit 3 bis 16 Kohlenstoffatomen je Säure ableiten, bei denen mindestens zwei der Valenzen des an die Carboxylgruppe gebundenen Kohlenstoffatoms durch mindestens zwei andere Kohlenstoffatome als dasjenige der Carboxygruppe abgesättigt sind, und Zinkoctoate. Weitere Beispiele für Katalysatoren (3) sind Alkoxytitanate, wie Butoxytitanate und Triethanolamintitanat, sowie Zirkonium- und Aluminiumverbindungen, insbesondere deren Carbonsäuresalze und Alkoholate.

Vorzugsweise wird der Kondensationskatalysator in Mengen von 0 bis 10 Gew.-%, bezogen auf die Summe aus Organopolysiloxan (A), Vernetzerkomponente (B) und gegebenenfalls Acylierungsmittel (C), eingesetzt.

Die erfindungsgemäße vernetzbare Zusammensetzung oder die durch Umsetzung der Zusammensetzung erhaltene Organopolysiloxanverbindung kann in Form einer Emulsion oder Mikroemulsion vorliegen, insbesondere wenn sie als Textilbehandlungsmittel eingesetzt werden soll. Vorzugsweise stellt die Mischung oder das Umsetzungsprodukt aus Organopolysiloxan (A), Vernetzerkomponente (B) und gegebenenfalls Acylierungsmittel (C) eine diskontinuierliche Ölphase in einer kontinuierlichen Wasserphase dar (Öl-in-Wasser-Emulsion).

Die Gewichtsverhältnisse der diskontinuierlichen Ölphase und der kontinuierlichen Wasserphase können in weiten Bereichen variiert werden. In der Regel beträgt der Anteil der Ölphase 5 bis 60 Gew.-%, vorzugsweise 10 bis 40 Gew.-%, jeweils bezogen auf das Gesamtgewicht der Emulsion. Der Anteil an Emulgatoren liegt vorzugsweise im Bereich von 5 bis 100 Gew.-%, insbesondere 10 bis 50 Gew.-%, jeweils bezogen auf das Gewicht der Ölphase.

Als anionische Emulgatoren eignen sich besonders:

1. Alkylsulfate, besonders solche mit einer Kettenlänge von 8 bis 18 C-Atomen und Alkylethersulfate mit 8 bis 18 C-Atomen im hydrophoben Rest und 1 bis 40 Ethylenoxid (EO)- bzw. Propylenoxid(PO)-einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; ggf. können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Alkylpolyglycolether, vorzugsweise solche mit 8 bis 40 EO-Einheiten und Alkylresten von 8 bis 20 C-Atomen.
6. Alkylarylpolyglycolether, vorzugsweise solche mit 8 bis 40 EO-Einheiten und 8 bis 20 C-Atomen in den Alkyl- und Arylresten.
7. Ethylenoxid/Propylenoxid(EO/PO)-Blockcopolymere, vorzugsweise solche mit 8 bis 40 EO- bzw. PO-Einheiten.
8. Fettsäuren mit 6 bis 24 C-Atomen.
9. Naturstoffe und deren Derivate, wie Lecitin, Lanolin, Saponine, Cellulose; Cellulosealkylether und Carboxyalkylcellulosen, deren Alkylgruppen jeweils bis zu 4 Kohlenstoffatome besitzen.
10. Polare Gruppen enthaltende lineare Organo(poly)siloxane, insbesondere solche mit Alkoxygruppen mit bis zu 24 C-Atomen und/oder bis zu 40 EO- und/oder PO-Gruppen. Als kationische Emulgatoren eignen sich besonders:
11. Salze von primären, sekundären und tertiären Fettaminen mit 8 bis 24 C-Atomen mit Essigsäure, Schwefelsäure, Salzsäure und Phosphorsäuren.

12. Quarternäre Alkylbenzolammoniumsalze, insbesondere solche, deren Alkylgruppe 6 bis 24 C-Atome besitzen, insbesondere die Halogenide, Sulfate, Phosphate und Acetate.

13. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Ferner eignen sich als Emulgatoren zur Herstellung der Emulsionen Fettsäurepolyglykolester, polyethoxylierte Fettsäureglyceride und Sorbitanester, Alkylpolyglycoside, Fettsäurealkylolamide, Alkylethercarbonsäuren, Alkarylethercarbonsäuren, ethoxylierte quarternäre Ammoniumsalze, Aminoxide, Betaine, Sulfobetaine und Sulfosuccinate.

Die Mischung oder Umsetzung der Komponenten (A) Organopolysiloxan, (B) Vernetzerkomponente und gegebenenfalls (C) Acylierungsmittel kann in beliebiger Reihenfolge erfolgen. Reaktive Komponenten setzen sich schon bei Raumtemperatur (RT) beim Vermischen um, so daß eine Beschleunigung durch Temperaturerhöhung zwar möglich, aber nicht notwendig ist. Bei Einsatz eines Acylierungsmittels (C) wird vorzugsweise zuerst das Organopolysiloxan (A) mit dem Acylierungsmittel (C) bei RT bis 180 °C umgesetzt und anschließend die Vernetzerkomponente (B) bei RT bis 50 °C zugesetzt. Bei der Umsetzung der Komponenten (A) Organopolysiloxan, (B) Vernetzerkomponente und gegebenenfalls (C) Acylierungsmittel ist meistens kein Katalysator erforderlich. Die Reaktionszeiten liegen meistens im Bereich von wenigen Minuten, beispielsweise bei Carbonsäureanhydriden, bis zu einigen Stunden, beispielsweise bei Lactonen und Carbonaten.

Bei der Herstellung einer Emulsion oder Mikroemulsion kann die Mischung oder Umsetzung der Komponenten (A) Organopolysiloxan, (B) Vernetzerkomponente und gegebenenfalls (C) Acylierungsmittel grundsätzlich vor, während oder nach dem Emulgierprozeß erfolgen, bei dem die Abmischung mit der Wasserphase und dem Emulgator durchgeführt wird. Der Emulgierprozeß kann in für die Emulgierung von Organopolysiloxanen bekannter Weise erfolgen, insbesondere nach dem in der EP-A-442 098 (K.Huhn et al.; offengelegt am 21.08.1991 für Wacker-Chemie GmbH, München) beschriebenen Verfahren.

Die Reaktion der Vernetzerkomponente (B) mit dem Organopolysiloxan (A) wird vorzugsweise erst während oder nach dem Emulgierprozeß durchgeführt, da es bei einer vollständigen Umsetzung der Komponenten (A) und (B) vor dem Emulgierprozeß, insbesondere bei einem hohen Amingehalt von (A) und einem hohen Mol%-Anteil von (B), zu einer Vorvernetzung kommen kann, die infolge von Gelbildung die Emulgierung erschwert. Insbesondere wird die (B) Vernetzerkomponente während des Emulgierprozesses zugesetzt. Die Reaktion mit dem Organopolysiloxan (A) erfolgt dann während oder nach dem Emulgierprozeß. Die Reaktion der Vernetzerkomponente (B) erfolgt auch in Gegenwart von Wasser sehr selektiv mit den Aminogruppen des Organopolysiloxans (A), so daß keine besonderen Vorkehrungen bei der Zugabe während oder nach dem Emulgieren getroffen werden müssen.

Beim Einsatz von Mono- und/oder Dicarbonsäuren als (C) Acylierungsmittel werden diese vorzugsweise vor oder während der Emulgierung mit dem (A) Organopolysiloxan homogen vermischt, hydrophile Ethercarbonsäuren vorzugsweise während oder nach der Emulgierung. Bei Verwendung von Monocarbonsäuren wird die Abmischung mit (A) Organopolysiloxan vorzugsweise bei 40 bis 150 °C durchgeführt. Im Falle von Dicarbonsäuren wird zur Vermeidung von zu hohen Viskositäten dagegen vorzugsweise bei RT gearbeitet und die Beimischung vorzugsweise während des Emulgierprozesses vorgenommen. Die verwendeten Mono- und/oder Dicarbonsäuren bilden bei erhöhter Temperatur, die entweder bereits bei der Abmischung mit (A) Organopolysiloxan oder bei der Ausrüstung von textilen Substraten erreicht wird, mit den Aminogruppen von (A) Organopolysiloxan Amidogruppen.

Offenkettige und cyclische Anhydride reagieren bereits bei RT mit den Aminogruppen des (A) Organopolysiloxans zu Amidogruppen, sowohl in Abwesenheit als auch in Gegenwart von Wasser. Die Umsetzung mit (A) Organopolysiloxan erfolgt deswegen durch Zugabe und homogene Einmischung der Anhydride wahlweise vor, während oder nach dem Emulgierprozeß. Insbesondere im Fall von cyclischen Anhydriden und einem hohen Amingehalt von A empfiehlt sich im allgemeinen zur Vermeidung zu hoher Viskositäten die Zugabe während oder nach dem Emulgierprozeß.

Beim Einsatz von Lactonen als (C) Acylierungsmittel werden diese vorzugsweise vor dem Emulgierschritt mit dem (A) Organopolysiloxan umgesetzt und durch die Reaktion mit den Aminogruppen von (A) werden Amidogruppen gebildet. Die Umsetzung selbst kann bei verschiedenen Bedingungen je nach Reaktivität der eingesetzten Lactone durchgeführt werden. Vorzugsweise wird bei erhöhter Temperatur gegebenenfalls unter Verwendung inerter Lösungsmittel, wie Toluol, Chlorkohlenwasserstoffen oder Ketonen, gearbeitet.

Beim Einsatz von Carbonaten als (C) Acylierungsmittel werden diese vorzugsweise vor dem Emulgierprozeß mit dem (A) Organopolysiloxan umgesetzt, wobei die Aminogruppen von (A) in Carbamatgruppen umgewandelt werden. Die Reaktionsbedingungen richten sich nach der Reaktivität der eingesetzten Carbonate. Beispielsweise läßt sich mit dem hochreaktiven Dimethyldicarbonat bereits durch Mischen bei RT eine

vollständige Umsetzung erreichen, während die cyclischen Carbonate vorzugsweise bei Temperaturen von 40 bis 120 °C, insbesondere bei 60 bis 90 °C, umgesetzt werden. Gegebenenfalls können auch inerte Lösungsmittel verwendet werden. Bei der Reaktion gegebenenfalls entstehende Nebenprodukte, wie $CO_2$ und Methanol bei Dimethyldicarbonat lassen sich, falls gewünscht, leicht destillativ entfernen.

Vorzugsweise erfolgt die Acylierung von (A) Organopolysiloxan dadurch, daß (A) Organopolysiloxan emulgiert wird und während oder nach dem Emulgierprozeß mit einer der vorstehend beschriebenen Carbonsäuren oder deren Anhydrid umgesetzt wird.

Diese Emulsion oder Mikroemulsion ist sehr gut lagerfähig, gut verdünnbar und alkalibeständig. Durch Umsetzung mit (B) Vernetzerkomponente erhält man eine Emulsion oder Mikroemulsion einer Organopolysiloxanverbindung, die sich sehr gut als Textilbehandlungsmittel eignet.

Die erfindungsgemäße vernetzbare Zusammensetzung kann für bestimmte Zwecke, beispielsweise für den Einsatz als Textilbehandlungsmittel, neben den vorstehenden Bestandteilen Zusatzstoffe enthalten. Geeignete Zusatzstoffe sind beispielsweise Biozide, wie Fungizide, Bakterizide, Algicide und Mikrobicide, Verdickungsmittel, Frostschutzmittel, Antistatika, Farbstoffe, Flammschutzmittel und organische Weichmacher.

Die erfindungsgemäße vernetzbare Zusammensetzung oder das Umsetzungsprodukt aus Organopolysiloxan (A), Vernetzerkomponente (B) und gegebenenfalls Acylierungsmittel (C) kann zur Behandlung von organischen Fasern, wie Fäden und Garnen, und daraus hergestellten textilen Gebilden, wie Vliesen, Matten, Strängen, gewebten, gewirkten oder gestrickten Textilien, die auch bisher mit Organosiliciumverbindungen imprägniert werden konnten, verwendet werden. Beispiele für Fasern, die imprägniert werden können, sind somit solche aus Keratin, insbesondere Wolle, Polyvinylalkohol, Mischpolymere von Vinylacetat, Baumwolle, Rayon, Hanf, natürliche Seide, Polypropylen, Polyethylen, Polyester, Polyurethan, Polyamid, Cellulose und Gemische aus mindestens zwei solcher Fasern. Wie aus der vorstehenden Aufzählung ersichtlich, können die Fasern natürlicher oder synthetischer Herkunft sein. Die Textilien können in Form von Stoffbahnen oder Kleidungsstücken bzw. Teilen von Kleidungsstücken vorliegen.

Bei Keratin, insbesondere Wolle, kann durch Imprägnierung mit der als Textilbehandlungsmittel verwendeten vernetzbaren Zusammensetzung oder deren Umsetzungsprodukt, vor allem, wenn das Keratin mit Chlor vorbehandelt, gespült und neutralisiert wurde, das Schrumpfen durch Verfilzen verhindert werden.

Die erfindungsgemäße vernetzbare Zusammensetzung oder das Umsetzungsprodukt kann in unverdünnter Form oder in Form von Lösungen in organischem Lösungsmittel oder vorzugsweise in Form wäßriger Emulsionen oder Mikroemulsionen auf die zu imprägnierende Faser oder das textile Gebilde aufgetragen werden. Die Emulsionen können, falls erforderlich, auf eine geeignete Anwendungskonzentration verdünnt werden. Zum Auftragen kann die vernetzbare Zusammensetzung noch mit anderen Additiven, wie organischen Weichmachern, Wachsdispersionen und zusätzlichen Katalysatoren, insbesondere Kondensationskatalysatoren, versetzt werden.

Das Auftragen der erfindungsgemäßen vernetzbaren Zusammensetzung oder deren Umsetzungsprodukt auf die zu imprägnierenden Fasern und textilen Gebilde kann in beliebiger, für die Imprägnierung von Fasern geeigneter und vielfach bekannter Weise erfolgen, z. B. durch Ausziehen, Tauchen, Streichen, Gießen, Sprühen, einschließlich Sprühen aus Aerosolverpackung, Aufwalzen, Klotzen oder Drucken.

Vorzugsweise wird die erfindungsgemäße vernetzbare Zusammensetzung oder deren Umsetzungsprodukt in solchen Mengen aufgetragen, daß die Gewichtszunahme der Faser durch diese Zusammensetzung, abzüglich der dabei gegebenenfalls mitverwendeten Verdünnungsmittel, 0,1 bis 10 Gew.-%, vorzugsweise 0,5 bis 4 Gew.-%, bezogen auf das Gewicht der Faser, beträgt.

Die Vernetzung der erfindungsgemäßen Zusammensetzung oder deren Umsetzungsprodukt auf der Faser kann schon bei Raumtemperatur (RT) erfolgen. Die Vernetzung kann durch Erwärmen auf z. B. 50 bis 250 °C, insbesondere auf 100 bis 180 °C, beschleunigt werden, wobei vorzugsweise 10 Sekunden bis 10 Minuten erwärmt wird.

Die mit der erfindungsgemäßen vernetzbaren Zusammensetzung oder deren Umsetzungsprodukt behandelten Fasern und textilen Gebilde weisen einen angenehmen weichen Griff auf, sind besonders beständig gegen Thermovergilbung, zeigen hohe Sprungelastizität und gute Knittererholung (Stretch-back-Eigenschaften), sind waschbeständig und schmutzabweisend (zeigen gutes Soil-Release-Verhalten) und weisen keine oder nur geringfügige Hydrophobie auf.

In den folgenden Beispielen beziehen sich alle Angaben von Teilen und Prozentsätzen auf das Gewicht, soweit nichts anderes angegeben ist.

## Beispiele

Beispiele 1 - 6 beschreiben Zwischenprodukte für die erfindungsgemäßen Beispiele.

### Beispiel 1

Unter $N_2$-Schutzgas wurden 40 ml Toluol und 167 g des aminofunktionellen Siliconöls A mit folgender Formel (titrierbarer Amingehalt = 0,6 mequiv/g)

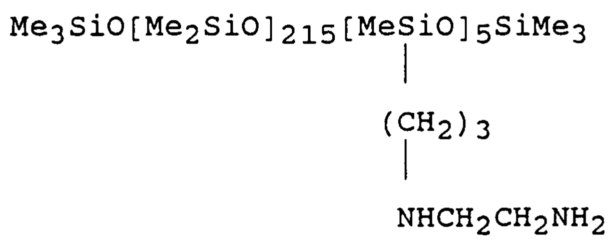

vorgelegt und unter Rühren 9 g Trioxadecansäure zudosiert. Anschließend wurde 2 Stunden auf 130 ° C am Wasserabscheider erhitzt und zum Schluß die flüchtigen Komponenten bei 140 ° C im Hochvakuum entfernt. Man erhielt ein leicht gelbliches Siliconöl mit der Viskosität 3000 $mm^2/s$ (bei 25 ° C) und einem titrierbaren Amingehalt von 0,3 mequiv/g.

### Beispiel 2

Unter $N_2$-Schutzgas wurden 222 g des aminofunktionellen Siliconöls B mit folgender Formel (titrierbarer Amingehalt = 0,45 mequiv/g)

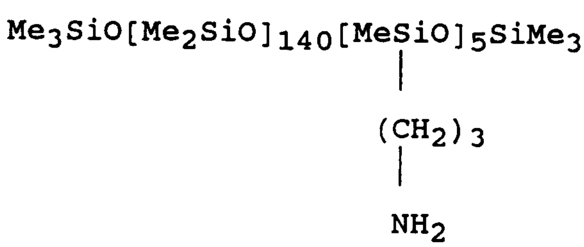

vorgelegt und mit 4,7 g $\gamma$-Butyrolacton versetzt. Man erhitzte unter Rühren 5 Stunden auf 120 ° C und erhielt nach dem Abkühlen ein leicht gelbliches Siliconöl mit einer Viskosität von 10.500 $mm^2/s$ (25 ° C) und einem titrierbaren Amingehalt von 0,23 mequiv/g.

### Beispiel 3

167 g des aminofunktionellen Siliconöls A aus Beispiel 1 wurden unter Rühren und $N_2$ als Schutzgas zusammen mit 7,2 g Lactid für 1 Stunde auf 80 ° C erhitzt. Nach dem Abkühlen erhielt man ein farbloses Siliconöl mit einer Viskosität von 25.000 $mm^2/s$ (25 ° C) und einem titrierbaren Amingehalt von 0,28 mequiv/g.

### Beispiel 4

Unter $N_2$-Schutzgas wurden 167 g des aminofunktionellen Siliconöls C mit folgender Formel (titrierbarer Amingehalt = 0,6 mequiv/g)

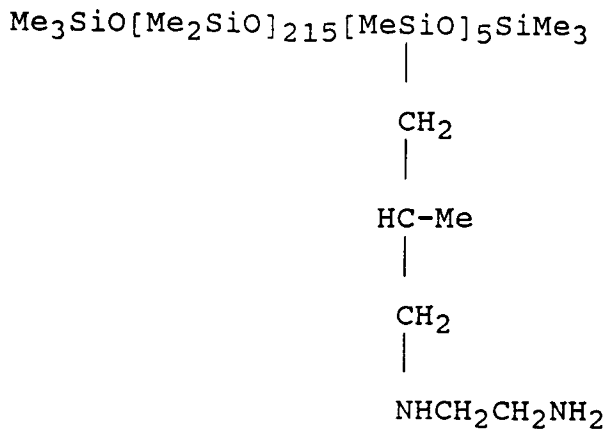

vorgelegt. Nach der Zugabe von 2,2 g Ethylencarbonat wurde unter Rühren 2 Stunden auf 80 °C erhitzt. Nach dem Abkühlen erhielt man ein farbloses Siliconöl mit einer Viskosität von 3.200 $mm^2/s$ (25 °C) und einem titrierbaren Amingehalt von 0,44 mequiv/g.

Beispiel 5

Unter $N_2$-Schutzgas wurden 334 g des aminofunktionellen Siliconöls D mit folgender Formel (titrierbarer Amingehalt = 0,3 mequiv/g)

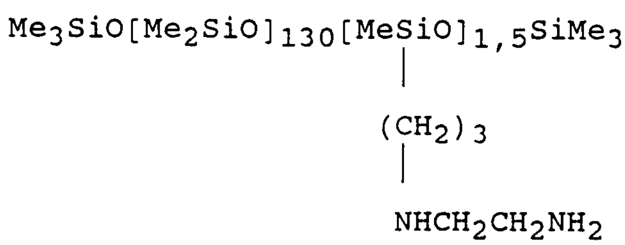

vorgelegt und bei Raumtemperatur unter Rühren mit 11,5 g des anhydridfunktionellen Silans folgender Struktur (Silan GF 20 der Firma Wacker-Chemie GmbH)

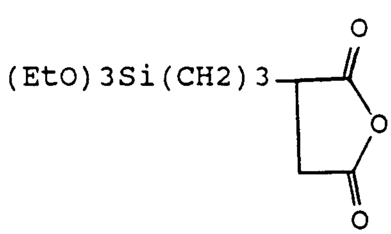

langsam versetzt.

Nach 30 Minuten Rühren hat sich die Viskosität geringfügig erhöht und der titrierbare Amingehalt ist auf 0,42 gefallen. Das erhaltene farblose Siliconöl vernetzte bei Luftkontakt in dünner Schicht bereits bei Raumtemperatur innerhalb weniger Stunden zu einem klebfreien Kautschukfilm.

Beispiel 6

Zu einer nichtionogenen 35 %igen Wasser-in-Öl(W/O)-Emulsion, die 235 g des aminofunktionellen Siliconöls E mit folgender Formel (titrierbarer Amingehalt = 0,52 mequiv/g)

$$Me_3SiO[Me_2SiO]_{400}[MeSiO]_8SiMe_3$$
$$|$$
$$(CH_2)_3$$
$$|$$
$$NHCH_2CH_2NH_2$$

enthielt, wurden 15 g des anhydridfunktionellen Silans, wie unter Beispiel 5 beschrieben, gegeben. Nach 30 Minuten Rühren bei Raumtemperatur ist der titrierbare Amingehalt des enthaltenen Siliconöls auf 0,16 mequiv/g gefallen. In dünner Schicht aufgetragen, vernetzte die erhaltene Emulsion nach dem Verdampfen des enthaltenen Wassers zu einem klebfreien Kautschukfilm.

Beispiele 7 - 15 beschreiben die Herstellung von wäßrigen (Mikro-)Emulsionen, die als Textilbehandlungsmittel verwendet werden können.

Beispiel 7

170 Gew.-Teile des aminofunktionellen Siliconöls F mit folgender Formel (titrierbarer Amingehalt = 0,3 mequiv/g)

$$MeO[Me_2SiO]_{215}[MeSiO]_{2,5}Me$$
$$|$$
$$(CH_2)_3$$
$$|$$
$$NHCH_2CH_2NH_2$$

wurden mit 60 Gew.-Teilen des nichtionogenen Emulgators Genapol[R] X 060 (Isotridecylalkoholpolyglykolether mit 6 Ethylenoxydeinheiten der Firma Hoechst AG) und mit 7,7 Gewichtsteilen des Silans GF 20 vermischt und anschließend wurden 60 Gew.-Teile Wasser mit einem hochtourigen Mischer eingearbeitet. Das entstandene Emulsionskonzentrat wird anschließend mit 702 Gew.-Teilen Wasser verdünnt.

Beispiel 8

170 Gew.-Teile des aminofunktionellen Siliconöls G mit folgender Formel (titrierbarer Amingehalt = 0,68)

$$MeO[Me_2SiO]_{114}[MeSiO]_3Me$$
$$|$$
$$(CH_2)_3$$
$$|$$
$$NHCH_2CH_2NH_2$$

wurden mit 60 Gew.-Teilen des nichtionogenen Emulgators Genapol[R] X 060, 3,6 Gew.-Teilen Essigsäureanhydrid und 9 Gew.-Teilen des Silans GF 20 (siehe Beispiel 5) abgemischt. Durch Emulgieren mit 60 Gew.-Teilen Wasser wurde ein Emulsionskonzentrat hergestellt, welches anschließend mit 697 Gew.-Teilen Wasser verdünnt wurde.

Beispiel 9

170 Gew.-Teile des aminofunktionellen Siliconöls A (siehe Beispiel 1) wurden mit 60 Gew.-Teilen des Emulgators Genapol$^R$ X 060, 5,1 Gew.-Teilen Essigsäureanhydrid und 6,0 Gew.-Teilen des Silans GF 20 (Beispiel 8) abgemischt. Durch Emulgieren mit 60 Gew.-Teilen Wasser wurde ein Emulsionskonzentrat hergestellt, welches anschließend mit 699 Gew.-Teilen Wasser verdünnt wurde.

Beispiel 10

Beispiel 9 wurde wiederholt mit dem einzigen Unterschied, daß folgende Mengen eingesetzt wurden:
3,7 g Essigsäureanhydrid
12 g Silan GF 20

Beispiel 11

173,6 Gew.-Teile des Reaktionsproduktes aus Beispiel 2 wurden mit 60 Gew.-Teilen des Emulgators Genapol$^R$ X 060 und 3 Gew.-Teilen des Silans GF 20 vermischt und mit 60 Gew.-Teilen Wasser zu einem Konzentrat emulgiert. Anschließend wurde mit 703 Gew.-Teilen Wasser verdünnt.

Beispiel 12

180 Gew.-Teile des Reaktionsproduktes aus Beispiel 1 wurden mit 60 Gew.-Teilen des Emulgators Genapol$^R$ X 060 und 6 Gew.-Teilen des Silans GF 20 vermischt, mit 60 Gew.-Teilen Wasser zu einem Konzentrat emulgiert und anschließend mit 694 Gew.-Teilen Wasser verdünnt.

Beispiel 13

177 Gew.-Teile des Reaktionsproduktes aus Beispiel 3 wurden mit 60 Gew.-Teilen des Emulgators Genapol$^R$ X 060 und 6 Gew.-Teilen des Silans GF 20 vermischt, mit 60 Gew.-Teilen Wasser zu einem Konzentrat emulgiert und anschließend mit 697 Gew.-Teilen Wasser verdünnt.

Beispiel 14

173 Gew.-Teile des Reaktionsproduktes aus Beispiel 4 wurden mit 60 Gew.-Teilen des Emulgators Genapol$^R$ X 060 und mit 12 Gew.-Teilen des Silans GF 20 vermischt, mit 60 Gew.-Teilen Wasser zu einem Konzentrat emulgiert und anschließend mit 695 Gew.-Teilen Wasser verdünnt.

Beispiel 15

Beispiel 8 wurde wiederholt mit der Abänderung, daß anstatt 3,6 Gew.-Teilen Essigsäureanhydrid 4,7 Gew.-Teile Dimethyldicarbonat und 12 Gew.-Teile des Silans GF 20 eingesetzt wurden.

Beispiele 16 - 18 beschreiben Vergleichsbeispiele gemäß dem Stand der Technik.

Beispiel 16

170 Gew.-Teile des aminofunktionellen Siliconöls A wurden mit 4 Gew.-Teilen Essigsäure und 60 Gew.-Teilen Genapol$^R$ X 060 abgemischt und mit 60 Gew.-Teilen Wasser zu einem Konzentrat emulgiert. Anschließend wurde mit 706 Gew.-Teilen Wasser verdünnt.

Beispiel 17

170 Gew.-Teile des aminofunktionellen Siliconöls F wurden mit 6 Gew.-Teilen Glycidoxypropyltrimethoxysilan versetzt und unter Rühren und $N_2$-Schutzgas 1 Stunde auf 90 °C erhitzt. Das Reaktionsprodukt wurde nach dem Abkühlen auf Raumtemperatur mit 60 Gew.-Teilen Genapol$^R$ X 060 und 60 Gew.-Teilen Wasser zu einem Konzentrat emulgiert und anschließend mit 704 Gew.-Teilen Wasser verdünnt.

Beispiel 18

170 Gew.-Teile des aminofunktionellen Siliconöls A wurden mit 4 Gew.-Teilen Essigsäureanhydrid und 5 Gew.-Teilen Glycidoxypropyltrimethoxysilan 1 Stunde auf 90 °C erhitzt. Nach dem Abkühlen auf Raumtemperatur wurde mit 60 Gew.-Teilen Genapol$^R$ X 060 und 60 Gew.-Teilen Wasser ein Emulsionskonzentrat hergestellt und anschließend mit 701 Gew.-Teilen Wasser verdünnt.

Beispiel 19

(Anwendungstechnische Beurteilung der in Beispiel 7 - 18 hergestellten Emulsionen):

19 a (Alkali-Scherstabilität):

Die zu testenden Emulsionen wurden mit Wasser auf einen Festgehalt von 0,6 % verdünnt und mit verdünnter wäßriger Kaliumhydroxidlösung auf einen pH-Wert von 9 eingestellt. Anschließend wurden die so hergestellten Testlösungen auf ihre Scherstabilität hin (mit einem Homomixer 8000 UpM, 3 Minuten) geprüft. Beurteilt wurde das Aussehen nach dem Schertest, wobei folgende Wertung vorgenommen wurde:
A: Aussehen unverändert, keine Ölflecken.
B: Leichte Ölflecken auf der Oberfläche.
C: Mehrere stärkere Ölflecken auf der Oberfläche.

19 b (Textilausrüstung):

Die zu testenden Emulsionen wurden mit Wasser auf einen Festgehalt von 0,5 % verdünnt und durch Tauchen und anschließendes Abquetschen auf weiße Baumwollwirkware aufgebracht. Das Abquetschen wurde derart durchgeführt, daß eine Flüssigkeitsaufnahme von 75 %, bezogen auf das Baumwollgewicht, erreicht wurde. Anschließend wurden die so imprägnierten Baumwollgewirke 5 Minuten bei 110 °C und 3 Minuten bei 150 °C getrocknet und folgenden anwendungstechnischen Prüfungen unterzogen:

Griffbeurteilung

Die Beurteilung erfolgte in einem Handtest nach einer relativen Skala von 0 - 10, wobei der Wert 10 den besten Weichgriff darstellt.

Vergilbung

Der Grad der Vergilbung wurde mit einem Farbmeßgerät (Colour-Meter TC-P III der Firma Tokyo Denshoku Co., Ltd.) festgestellt. Der gemessene yellowing index wurde mit der unbehandelten Probe als Referenz verglichen und als ΔYI festgehalten:

$$\Delta YI = YI\ (Probe) - YI\ (Referenz)$$

Abnehmende Vergilbung bedeutete kleinere ΔYI-Werte.

Knittererholungswinkel

Die Messungen wurden nach DIN 53890 durchgeführt und anschließend innerhalb einer relativen Skala von 0 - 5 bewertet, wobei von 0 nach 5 die Knittererholungswinkel zunehmen.

**Tabelle 1**

| Emulsion aus Beispiel | 7 | 8 | 9 | 10 | 11 | 12 | 13 | 14 | 15 | 16 | 17 | 18 | Unbe-handelt |
|---|---|---|---|---|---|---|---|---|---|---|---|---|---|
| Alkali-Scherstabilität | A | A-B | B | A | B | A-B | A-B | A | A | C | C | B-C | - |
| Weichgriff | 8 | 6 | 10 | 8 | 9 | 6 | 9 | 7 | 7 | 10 | 8 | 7 | 0 |
| Vergilbung ΔYI | +0,2 | +1,9 | +0,4 | +0,4 | +0,3 | +1,0 | +0,6 | +0,8 | +1,2 | +3,6 | +1,6 | +2,1 | 0 |
| Knitter-erholungs-winkel | 5 | 4 | 4 | 5 | 4 | 3 | 4 | 5 | 4 | 2 | 4 | 3 | 0 |

## Patentansprüche

1. Vernetzbare Zusammensetzung enthaltend
   (A) Organopolysiloxan, das mindestens einen einwertigen SiC-gebundenen Rest mit primären und/oder sekundären Aminogruppen aufweist,
   (B) als Vernetzerkomponente ein mindestens eine Carbonsäureanhydridgruppe aufweisendes Alkoxysilan und/oder Siloxan für die Vernetzung zwischen den Komponenten (A) und (B) und gegebenenfalls
   (C) als Acylierungsmittel Carbonsäuren und deren Anhydride, Lactone, Lactide der allgemeinen Formel

   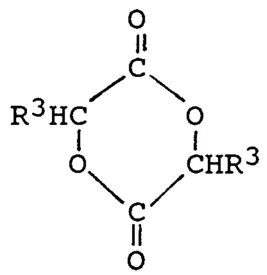 ,

   in der **$R^3$** einen einwertigen, gegebenenfalls mit einer oder mehreren Hydroxygruppen substituierten $C_1$- bis $C_{18}$-Kohlenwasserstoffrest, ein Wasserstoffatom oder einen Hydroxyrest bedeutet, Carbonate und Oxalsäureester.

2. Zusammensetzung nach Anspruch 1, wobei das Organopolysiloxan (A) mindestens eine Siloxaneinheit der allgemeinen Formel (I)

   $$R^1{}_aQ_bSiO_{\frac{(4-a-b)}{2}} \qquad (I)$$

   aufweist, und alle anderen Siloxaneinheiten die allgemeine Formel (II)

   $$R^1{}_cSiO_{\frac{(4-c)}{2}} \qquad (II)$$

   aufweisen, wobei
   **$R^1$** gleiche oder verschiedene, einwertige, gegebenenfalls Fluor-, Chlor- oder Brom-substituierte $C_1$- bis $C_{18}$-Kohlenwasserstoffreste, Wasserstoffatome, $C_1$- bis $C_{12}$-Alkoxy- oder Hydroxyreste oder Alkylglykolreste
   bedeutet,
   **Q** eine Gruppe der allgemeinen Formel (III)

   $-R^5-[(NR^2(CH_2)_m]_dNHR^2$

   bedeutet, wobei
   **$R^5$** einen zweiwertigen $C_1$- bis $C_{18}$-Kohlenwasserstoffrest bedeutet,
   **$R^2$** ein Wasserstoffatom oder einen gegebenenfalls Fluor-, Chlor- oder Brom-substituierten $C_1$- bis $C_{18}$-Kohlenwasserstoffrest bedeutet,
   **a** die Werte 0, 1 oder 2 hat,
   **b** die Werte 1, 2 oder 3 hat,
   **c** die Werte 0, 1, 2 oder 3 hat,

**d** die Werte 0, 1, 2, 3 oder 4 hat,
**m** die Werte 2, 3, 4, 5 oder 6 hat
und die Summe aus a und b maximal 4 beträgt.

**3.** Zusammensetzung nach Anspruch 1 oder 2, wobei das als Vernetzerkomponente (B) wirksame Siloxan mindestens eine Siloxaneinheit der allgemeinen Formel (V)

$$R^1_a Z_b SiO_{\frac{(4-a-b)}{2}} \qquad (V)$$

aufweist und alle anderen Siloxaneinheiten die allgemeine Formel (VI)

$$R^1_c SiO_{\frac{(4-c)}{2}} \qquad (VI)$$

besitzen, wobei
**$R^1$**, **a**, **b** und **c** die vorstehenden Bedeutungen aufweisen,
**Z** eine anhydridfunktionelle Gruppe der allgemeinen Formel (VII)

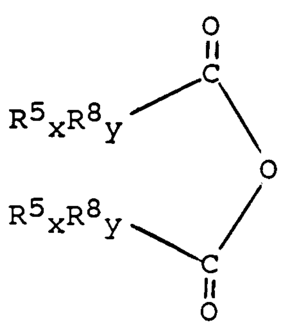

(VII)

ist, in der
**$R^8$** einen Rest $R^2$ bedeutet oder beide Reste $R^8$ zusammen mit den Kohlenstoffatomen, an die sie gebunden sind, einen cyclischen Kohlenwasserstoffrest mit 5 bis 15 Ringatomen bilden, der über einen zweiwertigen Rest $R^9$ an das Siliciumatom gebunden ist,
**x** und **y** jeweils die Werte 0 oder 1 haben,
**$R^9$** einen zweiwertigen $C_1$- bis $C_6$-Kohlenwasserstoffrest oder eine chemische Bindung bedeutet und
$R^5$ und $R^2$ die vorstehenden Bedeutungen aufweisen.

**4.** Zusammensetzung nach Anspruch 1 bis 3, wobei das als Vernetzerkomponente (B) wirksame Alkoxysilan die allgemeine Formel (VIII)

$R^1_b Z_{(3-b)} Si$ (VIII)

aufweist, in der **Z**, **$R^1$** und **b** die vorstehenden Bedeutungen aufweisen, mit der Maßgabe, daß mindestens ein Rest $R^1$ einen $C_1$- bis $C_{12}$-Alkoxyrest bedeutet.

**5.** Zusammensetzung nach Anspruch 1 bis 4, wobei die Zusammensetzung in Form einer Emulsion oder Mikroemulsion vorliegt.

**6.** Organopolysiloxanverbindung, erhältlich durch Umsetzung von (A) Organopolysiloxan gemäß Anspruch 1 oder 2 mit (B) Vernetzerkomponente gemäß Anspruch 1, 3 oder 4 und gegebenenfalls (C) Acylierungsmittel gemäß Anspruch 1.

**7.** Verfahren zur Herstellung einer Organopolysiloxanverbindung, dadurch gekennzeichnet, daß (A) Organopolysiloxan gemäß Anspruch 1 oder 2 mit (B) Vernetzerkomponente gemäß Anspruch 1, 3 oder 4 und gegebenenfalls (C) Acylierungsmittel gemäß Anspruch 1 umgesetzt wird.

**8.** Verfahren zur Herstellung einer Emulsion oder Mikroemulsion einer Organopolysiloxanverbindung, dadurch gekennzeichnet, daß (A) Organopolysiloxan gemäß Anspruch 1 oder 2 mit (B) Vernetzerkomponente gemäß Anspruch 1, 3 oder 4 und gegebenenfalls (C) Acylierungsmittel gemäß Anspruch 1 vor, während oder nach dem Emulgierprozeß umgesetzt werden.

**9.** Verwendung der vernetzbaren Zusammensetzung gemäß Anspruch 1 bis 5, der Organopolysiloxanverbindung gemäß Anspruch 6, der gemäß Anspruch 7 hergestellten Organopolysiloxanverbindung und der gemäß Anspruch 8 hergestellten Emulsion oder Mikroemulsion zur Behandlung von organischen Fasern und daraus hergestellten textilen Gebilden.

## Claims

**1.** Crosslinkable composition comprising

(A) organopolysiloxane which has at least one monovalent SiC-bonded radical comprising primary and/or secondary amino groups,

(B) as crosslinking component an alkoxysilane and/or siloxane which has at least one carboxylic anhydride group for the crosslinking between components (A) and (B) and optionally

(C) as acylating agent carboxylic acids and their anhydrides, lactones, lactides of the general formula

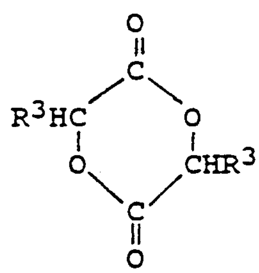
,

in which $R^3$ denotes a monovalent $C_1$ to $C_{18}$ hydrocarbon radical which is optionally substituted by one or more hydroxyl groups, or a hydrogen atom or a hydroxyl radical, carbonates and oxalic esters.

**2.** Composition according to Claim 1, wherein the organopolysiloxane (A) has at least one siloxane unit of the general formula (I)

$$R^1{}_aQ_bSiO_{\frac{(4-a-b)}{2}} \quad (I)$$

and all other siloxane units have the general formula (II)

$$R^1{}_cSiO_{\frac{(4-c)}{2}} \quad (II)$$

in which
the $R^1$s denote identical or different, monovalent, optionally fluorine-, chlorine- or bromine-substituted $C_1$ to $C_{18}$ hydrocarbon radicals, hydrogen atoms, $C_1$ to $C_{12}$ alkoxy radicals or hydroxyl radicals or alkyl glycol radicals,
Q denotes a group of the general formula (III)

$-R^5-[(NR^2(CH_2)_m]_d NHR^2$ (III)

in which
$R^5$ denotes a divalent $C_1$ to $C_{18}$ hydrocarbon radical,
$R^2$ denotes a hydrogen atom or an optionally fluorine-, chlorine- or bromine-substituted $C_1$ to $C_{18}$ hydrocarbon radical,
a has the values 0, 1 or 2,
b has the values 1, 2 or 3,
c has the values 0, 1, 2 or 3,
d has the values 0, 1, 2, 3 or 4,
m has the values 2, 3, 4, 5 or 6
and the sum of a and b is at most 4.

**3.** Composition according to Claim 1 or 2, wherein the siloxane which is effective as crosslinking component (B) comprises at least one siloxane unit of the general formula (V)

$$R^1_a Z_b SiO_{\frac{(4-a-b)}{2}} \quad (V)$$

and all other siloxane units have the general formula (VI)

$$R^1_c SiO_{\frac{(4-c)}{2}} \quad (VI)$$

in which
$R^1$, a, b and c have the above meanings,
Z is an anhydride-functional group of the general formula (VII)

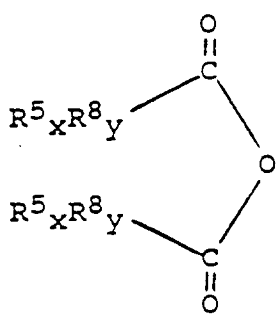

(VII)

in which
$R^8$ denotes a radical $R^2$, or the two radicals $R^8$ together with the carbon atoms to which they are bonded form a cyclic hydrocarbon radical having 5 to 15 ring atoms, which is bonded to the silicon atom via a divalent radical $R^9$,
x and y in each case have the values 0 or 1,
$R^9$ denotes a divalent $C_1$ to $C_6$ hydrocarbon radical or a chemical bond and
$R^5$ and $R^2$ have the above meanings.

**4.** Composition according to Claim 1 to 3, wherein the alkoxysilane which is effective as crosslinking component (B) has the general formula (VIII)

$R^1_bZ_{(3-b)}Si$ (VIII)

in which Z, $R^1$ and b have the above meanings, on condition that at least one radical $R^1$ denotes a $C_1$ to $C_{12}$ alkoxy radical.

**5.** Composition according to Claim 1 to 4, wherein the composition is in the form of an emulsion or microemulsion.

**6.** Organopolysiloxane compound, obtainable by reaction of (A) organopolysiloxane according to Claim 1 or 2 with (B) crosslinking component according to Claim 1, 3 or 4 and, optionally, (C) acylating agent according to Claim 1.

**7.** Process for the preparation of an organopolysiloxane compound, characterized in that (A) organopolysiloxane according to Claim 1 or 2 is reacted with (B) crosslinking component according to Claim 1, 3 or 4 and, optionally, (C) acylating agent according to Claim 1.

**8.** Process for the preparation of an emulsion or microemulsion of an organopolysiloxane compound, characterized in that (A) organopolysiloxane according to Claim 1 or 2 is reacted with (B) crosslinking component according to Claim 1, 3 or 4 and, optionally, (C) acylating agent according to Claim 1, before, during or after the emulsification process.

**9.** Use of the crosslinkable composition according to Claim 1 to 5, of the organopolysiloxane compound according to Claim 6, of the organopolysiloxane compound prepared according to Claim 7 and of the emulsion or microemulsion prepared according to Claim 8 for the treatment of organic fibres and textile structures produced therefrom.

## Revendications

**1.** Composition réticulable contenant

(A) un organopolysiloxane, présentant au moins un reste monovalent lié à SiC ayant des groupes amino primaires et/ou secondaires,

(B) au moins un groupe d'anhydrides d'acide carboxylique, en tant qu'agent de réticulation, présentant un alcoxysilane et/ou un siloxane en vue de la réticulation entre les composants(A) et (B) et éventuellement

(C) en tant qu'agent d'acylation, des acides carboxyliques et leurs annydrides, lactones, lactides de formule générale

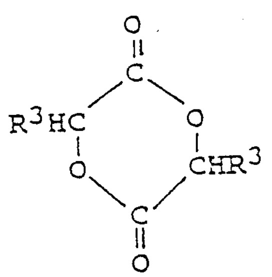 ,

dans laquelle $R^3$ signifie un reste hydrocarboné monovalent de 1 à 18 carbones éventuellement substitué par un ou plusieurs groupes hydroxy, un atome d'hydrogène ou un reste hydroxy,
des carbonates et des esters d'acide oxalique.

**2.** Composition selon la revendication 1, l'organopolysiloxane (A) présent dans la composition présentant au moins une unité siloxane de formule générale (I)

$$R^1_aQ_bSiO_{\frac{(4-a-b)}{2}} \qquad (I)$$

et toute autre unité siloxane de formule générale (II)

$$R^1_cSiO_{\frac{(4-c)}{2}} \qquad (II)$$

les radicaux $R^1$, identiques ou différents, signifiant un reste hydrocarboné monovalent de 1 à 18 atomes de carbone éventuellement fluoro-, chloro- ou bromo-substitué, un atome d'hydrogène, un alcoxy de 1 à 12 atomes de carbone ou un reste hydroxy ou un reste alkyl-glycol,
Q signifiant un groupe de formule générale (III)

$-R^5-[(NR^2(CH_2)_m]_dNHR^2$

$R^5$ signifiant un reste hydrocarboné divalent de 1 à 18 atomes de carbone,
$R^2$ signifiant un atome d'hydrogène ou un reste hydrocarboné de 1 à 18 atomes de carbone éventuellement fluoro-, chloro- ou bromo-substitué,
a ayant la valeur 0, 1 ou 2,
b ayant la valeur 1, 2 ou 3,
c ayant la valeur 0, 1, 2 ou 3,
d ayant la valeur 0, 1, 2, 3 ou 4,
m ayant la valeur 2, 3, 4, 5 ou 6,
et la somme de a et b s'élevant au maximum à 4.

**3.** Composition selon la revendication 1 ou 2, le siloxane efficace en tant que composé de réticulation (B) possèdant au moins une unité siloxane de formule générale (V)

$$R^1_aZ_bSiO_{\frac{(4-a-b)}{2}} \qquad (V)$$

et toute autre unité siloxane qui possède la formule générale (VI)

$$R^1_cSiO_{\frac{(4-c)}{2.}} \qquad (VI)$$

$R^1$, a, b et c possédant les significations précédentes,
Z étant un groupe fonctionnel anhydride de formule générale (VII)

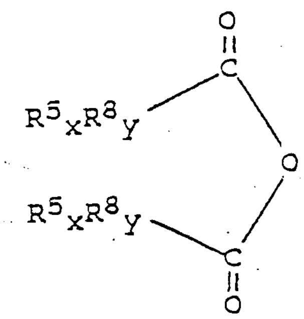

(VII)

dans laquelle
$R^8$ signifie un reste $R^2$ ou les deux restes $R^8$ forment ensemble, les atomes de carbone étant reliés entre eux, un reste hydrocarboné cyclique ayant de 5 à 15 atomes dans le cycle, lequel étant lié à un atome de silicium par l'intermédiaire d'un reste $R^9$ divalent,
x et y ont chacun la valeur 0 ou 1,
$R^9$ signifie un reste hydrocarboné divalent ayant de 1 à 6 atomes de carbone ou une liaison chimique et
$R^5$ et $R^2$ possèdent les significations précédentes.

**4.** Composition selon la revendication 1 à 3, l'alcoxysilane efficace en tant que composé de réticulation (B) présentant de préférence la formule générale (VIII)

$R^1_bZ_{(3-b)}Si$ (VIII)

dans laquelle Z, $R^1$ et b possèdent les significations précédentes, étant entendu qu'au moins un des restes $R^1$ signifie un reste alcoxy de 1 à 12 atomes de carbone.

**5.** Composition selon l'une des revendications 1 à 4, composition se présentant sous la forme d'une émulsion ou d'une micro-émulsion.

**6.** Composé organopolysiloxane, que l'on peut obtenir par réaction entre (A) l'organopolysiloxane conforme à la revendication 1 ou 2 et (B) le composant de réticulation conforme à l'une des revendications 1, 3 ou 4 et éventuellement (C) un agent d'acylation conforme à la revendication 1.

**7.** Procédé de préparation d'un composé organopolysiloxane caractérisé en ce que (A) l'organopolysiloxane conforme à la revendication 1 ou 2 est mis en réaction avec (B) le composant de réticulation conforme à l'une des revendications 1, 3 ou 4 et éventuellement (C) l'agent d'acylation conforme à la revendication 1.

**8.** Procédé de préparation d'une émulsion ou d'une micro-émulsion d'un composé organopolysiloxane, caractérisé en ce que (A) un organopolysiloxane conforme à la revendication 1 ou 2 est mis en réaction avec (B) un composant de réticulation conforme à l'une des revendications 1, 3 ou 4 et éventuellement (C) un agent d'acylation conforme à la revendication 1, avant, pendant ou après le processus de mise en émulsion.

**9.** Utilisation d'une composition réticulable selon l'une des revendications 1 à 5, d'un composé organopolysiloxane selon la revendication 6, le composé organopolysiloxane étant préparé selon la revendication 7 et de l'émulsion ou de la micro-émulsion préparée selon la revendication 8 afin de traiter des fibres organiques et les produits textiles préparés à partir de ces fibres.